# EUROPEAN PATENT SPECIFICATION

(11) **EP 0 699 327 B1**
(45) Date of publication and mention of the grant of the patent: **03.03.1999**
(21) Application number: 94915221.9
(22) Date of filing: 13.05.1994
(51) Int. Cl.: G07F 7/12, G06K 19/08, G06K 17/00

(54) **SECURITY SYSTEM**
SICHERHEITSSYSTEM
SYSTEME DE SECURITE

(30) Priority: 14.05.1993 GB 9309914
(43) Date of publication of application: 06.03.1996
(73) Proprietor: ABATHORN LIMITED, Edinburgh EH4 2HG (GB)
(72) Inventor: FOURACRES, Rodney, Gloucestershire GL7 7AN (GB); DOUGLAS, Graeme, Scott, Edinburgh EH12 6LA (GB)
(74) Representative: Szczuka, Jan Tymoteusz
(86) International application number: GB9401033
(87) International publication number: WO9427259

(56) References cited:
- WO-A-88/01818
- WO-A-92/05521
- WO-A-92/16913
- GB-A- 2 073 661
- GB-A- 2 101 376
- GB-A- 2 109 745
- US-A- 4 222 662

## Description

The present invention relates to security systems and in particular to systems for verification of so-called bearer documents such as cheques, stocks, bonds, and certificates whose value is determined by critical data items such as expiry dates, monetary amounts, and beneficiary identity, printed on them.

The production of such documents often involves a high degree of mechanisation with high speed printing (up to 50 pages per minute or more) using laser or impact printers. Unfortunately this type of printing is vulnerable to fraud by dishonest persons as it can be lifted from the face of the documents and replaced by new data.

Various more or less complex security systems have been previously proposed for various applications to combat fraud. These have various drawbacks such as considerable complexity, ease of circumvention, need for substantial changes to normal procedures and so on.

One system that has previously been proposed in GB 1,484,042 uses special enciphering devices to generate a so-called crypto-number by processing the values amount data, and a specially generated serial number using a secret code. The crypto-number, serial number and amount data are all printed on the document which is later processed by a special document assessing apparatus which has a similar enciphering device which generates a crypto-number in the same way from the printed serial number and amount data and the same secret code and then compares the newly generated crypto-number with the printed crypto-number. If the amount data has been changed then the newly generated crypto-number will not match the printed one.

A major weakness with such a system is that once the secret code used in the enciphering device to generate the crypto-number becomes known, then it is relatively easy for a fraudster to generate and apply a suitable new crypto-number to match the altered amount data, and since the enciphering device needs to be available to a number of users, there is a problem in protecting the secrecy of the secret code.

Another system has been proposed in WO-A-8801818 wherein data items are either entered individually by the user in response to displayed prompts or are stored (permenantly) in a system memory. In either case in order to obtain data items for encoding, it is necessary for the system or processor to access individual areas of memory and to read the data items stored therein. This system provides no means for extracting data items to be encoded from a data stream received from a computer. Furthermore this system requires the use of a keyboard for enabling the input of data items by a user. The use of a keyboard in the system for generating the data to be used will inevitably result in an extremely slow throughput of data. Moreover, the data in the open user-readable form and the encoded data are not printed in a single pass and the system is not adapted for the mass production of cheques. Another system is known from GB-A-2109745 which discloses a method and apparatus for the production of travellers cheques and prints on each cheque in machine readable characters (which are also human-readable) a sort code representing the issuing financial institution and serial number.

It is an object of the present invention to avoid or minimize one or more of the above disadvantages.

The present invention provides a bearer document verification system including a printing system which includes: a primary computer controlled printer having input means for receiving a data stream from a computer, the data stream containing a plurality of data items at least two of which are value critical, and being arranged to print said data items onto a bearer document in an open user-readable form; computer means programmed for extracting both, or at least two of, said value critical data items from said data stream and for encoding the extracted items into a coded machine readable form in accordance with a pre-determined code so that when printed the encoded data items are non-user readable without the aid of additional equipment; printer means having input means for receiving the encoded data items and being arranged to print the received items substantially immediately onto the bearer document, wherein printing of the open form and encoded data items may be effected in a single pass through the printing system enabling high speed automated mass production of bearer documents,
the verification system further including verification means comprising:
bearer document reading means for reading at least the encoded data items printed on the documents; and
processing means for converting the read data items into a form suitable for comparison with the open form data items printed on the document.

The comparison may simply be effected manually by outputting the decoded value critical data items to a visual display unit to allow comparison thereof with the open form on the bearer document by an operative. Conveniently though there is used (the same or additional) reading means formed and arranged to read machine readable open (user-readable) forms of said at least two value critical data items and comparator means are provided for automatically comparing said open and decoded forms of said at least two value critical data items and providing an output indicating correspondence or otherwise thereof.

With the system of the present invention a significantly increased level of security can be readily incorporated into existing cheque processing systems with limited additional costs and minimal disruption. Thus, for example, a bulk cheque issuer such as a welfare payment agency can simply incorporate suitable computer means to extract value critical data such as the payment amount and use it to generate printing instructions for the coded machine readable from thereof which may be used to drive the existing printer used to print the normal data on the cheque, or another printer device. When the cheque is subsequently presented for encashment or payment into a bank account, the teller will read off the open form of the payment amount and beneficiary identity and either key in said details into a computer terminal to transfer said amount into the beneficiary's account or pay out said amount directly.

Under existing practice no system for authenticating the value critical data or beneficiary exists in any bank, building society, post office or similarly authorised encashment facility other than by visual means. Thus by utilising a simple electronic code reading device installed at the point of presentation of the bearer document the teller is instantly able to compare the secure encoded form of the critical data with the open form data and immediately highlight any discrepancy whether it be due to fraudulent alternation of the open form of the amount and or beneficiary or an amount inputting error by the teller.

Furthermore when the cheque or bearer documents are amount encoded in intra-bank processing the same verification procedures and processes can be utilised and installed to outsort any amount encoding input errors and consequently virtually eliminate inter-branch and/or inter-bank balancing discrepancies.

When implementing the system of the present invention it is not necessary to use any highly complex enciphering system for generating the coded machine readable form of the value critical data item. Advantageously there is simply used a means for printing the coded form in a way that is more or less unobtrusive and not readily identifiable by or intelligible to the fraudster e.g. using invisible ink and/or difficult to reproduce manually or simply, e.g. using ordinary or more complex bar-coding.

In order to minimize disruption to existing processing systems, it is desirable that the primary printer apparatus should, in accordance with existing practice, be a high speed printer such as a laser printer to maintain processing speed. As noted above, this printer could also be used for printing certain types of coded form of value critical data items e.g. bar-coded or other symbolic types, or coded alpha, numeric, or alphanumeric forms.

Having regard to the fact, though, that the coded form of data would normally only constitute a small part of the whole of the data to be printed on the cheque or other bearer document, a different and slower printer e.g. a line printer such as an ink-jet printer could be used for this thereby allowing the use of e.g. invisible ink for the printing of the coded form of data without unduly slowing the cheque writing process. Suitable invisible inks that may used are known in the art. In the case of the use of invisible inks the electronic reading device would automatically "illuminate" the machine readable code.

With regard to the computer means used to extract the value critical item from the data stream, it will be appreciated that this involves only a relatively small computational load so that this may readily be effected by a microprocessor which can easily be incorporated into the printer means used for the coded form of the value critical data item, which in turn could conveniently be integrated with the primary printer apparatus.

It will further be appreciated from the above that the system of the present invention is particularly suitable for integration with existing bearer document processing systems not only from an operational point of view but also in relation to its suitability for retro-fitting into existing conventional systems thereby providing a particularly convenient and economic means for achieving a significant increase in security.

In a further aspect the present invention provides a method for enabling verification of the authenticity of a bearer document and comprising the steps of:
receiving from a computer a data stream comprising a plurality of data items to be printed on the bearer document in open user-readable form, at least two of the data items being value critical;
extracting from the data stream both, or at least two, value critical data items and encoding the extracted data items into a form for printing on the bearer document in accordance with a predetermined code in a non-user readable but machine readable and decodable form; and
printing the data stream of data items, together with the encoded data items, onto the bearer document in a single pass enabling high speed automated mass production of bearer documents.

Further preferred features and advantages of the present invention will appear from the following detailed description given by way of example of a preferred embodiment illustrated with reference to the accompanying drawings in which:

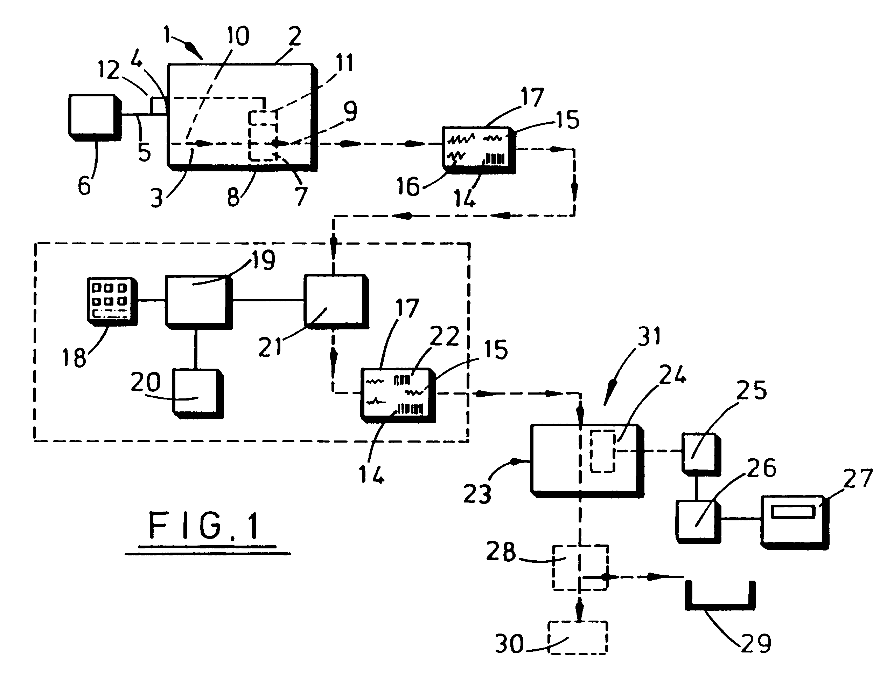

Fig. 1 is a schematic block diagram of a bearer document verification system of the present invention.

Fig. 1 shows a verification system 1 comprising a primary cheque writing means 2 in the form of a computer controlled laser printer 3 having an input 4 connected by a printer lead 5 to a cheque issuing computer 6 for conducting a data stream containing all the data items such as payee name, date, amount in figures and words, and signature etc., to be printed on each cheque in the normal way. An ink-jet line printer device 7 is mounted within the housing 8 of the page printer 3 at a downstream end portion 9 of the cheque path 10 through the page printer 3. A microprocessor 11 is coupled 12 to the printer lead 5 for extracting the value critical data item comprising the payment amount from the data stream passing therethrough and produces an output (using suitable encoding software) in the form of suitable printer commands which are supplied 13 to the ink-jet printer 7, to produce a bar-coded form 14 of the payment amount which has been printed in open form 15 thereof along with the other usual data items 16 on the cheque 17.

An alternative system can be provided by a computer (for example a desk-top personal computer) coupled to an ordinary laser printer, the computer being arranged to extract, and encode, said value critical data items from a data stream emanating from the computer keyboard. Both open-form and encoded data items are supplied to the printer in a "ready to print" format.

When the beneficiary or payee presents the cheque to a bank or similarly authorized encashment facility, the teller feeds the said cheque into an automatic verification means 31 comprising of the reader 23 which has a suitable reading head 24 (and in the case where invisible inks are utilised an illumination device) for scanning at least two items of critical data, usually the amount 22 and the beneficiary identity in the encoded form 14 originally printed on the documents 17.

The latter, and if necessary, the former, are decoded by suitable processor means 25, and compared by comparator means 26 which provides an output to a suitable visual display unit 27 indicating correspondence or otherwise of these two items. Alternatively there may be included an automated sorting device 28 for diverting any cheques with discrepancies to a separate review station 29 and/or an alarm device 30 for signalling detection of any discrepancy. Naturally other routine processing means such as computer means formed and arranged for debiting the payer's account with payment amounts from cheques passed as correct by the verification system may be included in the normal way but are not shown specifically in the drawing.

An alternative or subsequent process can incorporate the same said verification device and alarm system utilising the said selected and encoded critical data where an operator enters the amount data from the open form via a key pad 18 of a computer terminal 19 which activates a receipt printer 20 and a secondary encoding means comprising a secondary printer 21 which may be of any convenient type and prints the entered amount in any convenient form 22 onto the cheque 17 which is then passed on in the normal way through the bank clearing system.

Although the system of the present invention is particularly useful for cheques, it is also applicable to a wide variety of bearer documents. In this connection it will be appreciated that the system can readily be optimized for particular applications. Thus for example in the case of vehicle tax discs which are normally mounted on the inside of a vehicle windscreen, there would normally be used a compact portable battery or solar cell powered bearer document verification device which need only to read and decode said at least two value critical data items, usually the expiry date and the vehicle registration number, and display the open user-readable forms thereof on a suitable visual display unit, generally a liquid crystal display device, to allow the user to compare the displayed decoded data items with the open forms thereof printed on the tax disc. Conveniently the coded forms are in a form which can be read by swiping a suitable reading head over them - e.g. a bar code readable by a bar code reading device.

It will be appreciated that the dual-form data applied to documents using embodiments of the present invention also allows data recovery where part of the open-form data has been obscured or otherwise made unreadable. For example, if a user's name has been obscured, the name can be recovered if the name was selected as a value critical data item and printed on the document in an encoded form. This can help to avoid or minimise processing problems within the bank clearing system.

For the avoidance of doubt the expression "production of bearer documents" in the context of the present invention means the printing of substantially all the relevant transaction specific data items required to give effect to a bearer document e.g. in the case of a cheque: beneficiary identity, date, payment amount, and, in some cases, facsimile signature. The printing may moreover be effected on a blank bearer document including standard features and data such as the identity and account details of the payer and the name of the bank issuing the bearer document, or may even in some cases included printing some or all of the standard data and other features onto plain paper or partially prepared blank forms.

Various modifications may be made to the above described embodiment within the scope of the appended claims. For example, coding of value critical data items may be achieved by enabling the printing of data items in any form which is substantially non-user readable without the aid of additional equipment. Various non-alphanumeric printing methods in addition to bar-code printing may be used. Alternatively, printing may be carried out in "invisible" ink which is subsequently made visible by the verification reading means.

## Claims

1. A bearer document verification system including a printing system (2) which includes:
a primary computer controlled printer (3) having input means (4) for receiving a data stream from a computer (6), the data stream containing a plurality of data items at least two of which are value critical, and being arranged to print said data items onto a bearer document (17) in an open user-readable form;
computer means (11) programmed for extracting both, or at least two of, said value critical data items from said data stream and for encoding the extracted items into a coded machine readable form in accordance with a pre-determined code so that when printed the encoded data items are non-user readable without the aid of additional equipment;
printer means (2) having input means for receiving the encoded data items and being arranged to print the received items substantially immediately onto the bearer document (17),
wherein printing of the open form and encoded data items may be effected in a single pass through the printing system (2) enabling high speed automated mass production of bearer documents (17),
the verification system further including verification means (21) comprising:
bearer document reading means (23) for reading at least the encoded data items printed on the documents (17);
and
processing means (25) for converting the read data items into a form suitable for comparison with the open form data items printed on the document (17).

2. A system according to claim 1, wherein the document reading means (23) comprises a display unit (27) for displaying the decoded data items to allow a visual comparison with the corresponding open form data items printed on the document (17).

3. A system according to claim 1, wherein the document reading means (23) comprises means for reading the open form data items printed on the document (17) and compariscn means (26) for automatically comparing the read open form data items and the decoded data items to provide an output indication of the correspondence.

4. A system according to any one of the preceding claims, wherein said document (17) is a cheque.

5. A system according to any one of the preceding claims, wherein said printing means (3) is arranged to print the coded data items in invisible ink.

6. A system according to any one of the preceding claims, wherein said computer means (11) encodes the extracted data items by converting them into non-alphanumeric printable characters.

7. A system according to claim 6, wherein the printing means (3) is arranged to print the coded data items in the form of a single or multi-dimensional bar code.

8. A system according to any one of the preceding claims, wherein the printer means (3) for printing the coded data items, the primary computer controlled printer means (3) for printing the user readable data items, and the computer means (11), are integrated into a single unit.

9. A method for enabling verification of the authenticity of a bearer document (17) and comprising the steps of:
receiving from a computer (11) a data stream comprising a plurality of data items to be printed on the bearer document (17) in open user-readable form, at least two of the data items being value critical;
extracting from the data stream both, or at least two, value critical data items and encoding the extracted data items into a form for printing on the bearer document in accordance with a predetermined code in a non-user readable but machine readable and decodable form; and
printing the data scream of data items, together with the encoded data items, onto the bearer document in a single pass enabling high speed automated mass production of bearer documents.

10. A method according to claim 9, wherein said coded data items are printed onto the document (17) in a form which is invisible to the unaided eye.

11. A method according to claim 9 or 10, wherein the step of encoding the extracted data items does not involve the use of an encryption key.

12. A method according to any one of the claims 9 to 11 and comprising reading the encoded data items from the document (17) and deccding them into a form which enables a comparison to be made with the open form data items printed on the document.

13. A method according to claim 12 and including the step of visually displaying the decoded data items to allow a visual comparison to be made with the open form data items printed on the document.

14. A method according to claim 12 and including the step of additionally reading by means of a machine (23) said open form data items printed on the document (17) and carrying out an automated comparison between said read open form data items and the decoded items and providing an output indication of the correspondence.

## Patentansprüche

1. Inhaberdokument-Überprüfungsystem mit einem Drucksystem (2), das aufweist:
einen primären computergesteuerten Drucker (3), der eine Eingabeeinrichtung (4) zum Empfangen eines Datenstroms von einem Computer (6) aufweist, wobei der Datenstrom eine Vielzahl von Datenelementen enthält, von denen mindestens zwei wertkritisch sind, und der so eingerichtet ist, daß die Datenelemente in einer offenen anwenderlesbaren Form auf die Inhaberdokumente (17) gedruckt werden;
eine Computereinrichtung (11), die zum Extrahieren beider oder mindestens zweier der wertkritischen Datenelemente aus dem Datenstrom und zum Codieren der extrahierten Datenelemente in eine codierte maschinenlesbare Form entsprechend einem vorbestimmten Code programmiert ist, so daß die codierten Datenelemente, wenn sie gedruckt sind, ohne die Hilfe einer zusätzlichen Ausrüstung nichtanwenderlesbar sind;
eine Druckereinrichtung (3), die eine Eingabeeinrichtung zum Empfangen der codierten Datenelemente aufweist und so eingerichtet ist, daß die empfangenen Elemente im wesentlichen unmittelbar auf das Inhaberdokument (17) gedruckt werden,
wobei das Drucken der offenen Form und der codierten Datenelemente mittels des Drucksystems (2) in einen einzigen Durchlauf ausgeführt werden kann, wodurch eine automatisierte Hochgeschwindigkeitsmassenproduktion von Inhaberdokumenten (17) ermöglicht wird;
wobei das Überprüfungssystem ferner aufweist: eine Überprüfungseinrichtung (31) mit:
einer Inhaberdokument-Leseeinrichtung (23) zum Lesen mindestens der auf das Dokument (17) gedruckten codierten Datenelemente;
und
einer Verarbeitungseinrichtung (25) zum Umwandeln der gelesenen Datenelemente in eine Form, die zum Vergleich mit den auf das Dokument (17) gedruckten Datenelementen der offenen Form geeignet ist.

2. System nach Anspruch 1, wobei die Dokument-Leseeinrichtung (23) eine Anzeigeeinheit (27) zum Anzeigen der decodierten Datenelemente aufweist, um einen visuellen Vergleich mit den entsprechenden, auf das Dokument (17) gedruckten Datenelementen der offenen Form zu ermöglichen.

3. System nach Anspruch 1, wobei die Dokument-Leseeinrichtung (23) aufweist: eine Einrichtung zum Lesen der auf das Dokument (17) gedruckten Datenelemente der offenen Form und eine Vergleichseinrichtung (26) zum automatischen Vergleichen der gelesenen Datenelemente der offenen Form und der decodierten Datenelemente, um eine Ausgabeanzeige der Übereinstimmung bereitzustellen.

4. System nach einen der vorhergehenden Ansprüche, wobei das Dokument (17) ein Scheck ist.

5. System nach einem der vorhergehenden Ansprüche, wobei die Druckeinrichtung (3) so eingerichtet ist, daß die codierten Datenelemente mit unsichtbarer Tinte gedruckt werden.

6. System nach einem der vorhergehenden Ansprüche, wobei die Computereinrichtung (11) die extrahierten Datenelemente codiert, indem sie in nichtalphanumerische druckbare Zeichen umgewandelt werden.

7. System nach Anspruch 6, wobei die Druckeinrichtung (3) so eingerichtet ist, daß die codierten Datenelemente in Form eines ein- oder mehrdimensionalen Strichcodes gedruckt werden.

8. System nach einem der vorhergehenden Ansprüche, wobei die Druckereinrichtung (3) zum Drucken der codierten Datenelemente, die primäre computergesteuerte Druckereinrichtung (3) zum Drucken der anwenderlesbaren Datenelemente und die Computereinrichtung (11) in einer einzigen Einheit integriert sind.

9. Verfahren, mit dem die Authentizität eines Inhaberdokuments (17) überprüft werden kann und das die Schritte aufweist:
Empfangen eines Datenstroms mit einer Vielzahl von Datenelementen, die in offener anwenderlesbarer Form auf das Inhaberdokument (17) zu drucken sind, von einen Computer (11), wobei mindestens zwei der Datenelemente wertkritisch sind;
Extrahieren von beiden oder mindestens zwei wertkritischen Datenelementen aus dem Datenstrom und Codieren der extrahierten Datenelemente in eine Form zum Drucken auf das Inhaberdokument entsprechend einem vorbestimmten Code in einer nichtanwenderlesbaren, aber maschinenlesbaren und decodierbater Form; und
Drucken des Datenstroms von Datenelementen zusammen mit den codierten Datenelementen auf das Inhaberdokument in einem einzigen Durchlauf, wodurch eine automatisierte Hochgeschwindigkeitsmassenproduktion von Inhaberdokumenten ermöglicht wird.

10. Verfahren nach Anspruch 9, wobei die codierten Datenelemente in einer Form, die für das bloße Auge unsichtbar ist, auf das Dokument (17) gedruckt werden.

11. Verfahren nach Anspruch 9 oder 10, wobei der Schritt des Codierens der extrahierten Datenelemente die Anwendung eines Verschlüsselungsschlüssels nicht einschließt.

12. Verfahren nach einem der Ansprüche 9 bis 11, mit den Schritten: Lesen der codierten Datenelemente vom Dokument (17) und Decodieren derselben in eine Form, die es ermöglicht, daß ein Vergleich mit den auf das Dokument gedruckten Datenelementen der offenen Form durchgeführt wird.

13. Verfahren nach Anspruch 12, mit dem Schritt: visuelles Anzeigen der decodierten Datenelemente, um die Durchführung eines visuellen Vergleichs mit den auf das Dokument gedruckten Datenelementen der offenen Form zu ermöglichen.

14. Verfahren nach Anspruch 12, und mit den Schritten: zusätzliches Lesen der auf das Dokument (17) gedruckten Datenelemente der offenen Form mittels einer Maschine (23) und Durchführen eines automatischen Vergleichs zwischen den gelesenen Datenelementen der offenen Form und den decodierten Elementen und Bereitstellen einer Ausgabeanzeige der Übereinstimmung.

## Revendications

1. Système de vérification de document au porteur incluant un système d'impression (2) qui inclut:
une imprimante commandée par ordinateur primaire (3) comportant des moyens d'entrée (4) pour recevoir un train de données en provenance d'un ordinateur (6), le train de données contenant une pluralité d'éléments de données dont au moins deux sont critiques en valeur, et qui est agencée pour imprimer lesdits éléments de données sur un document au porteur (17) sous une forme lisible par utilisateur accessible;
des moyens d'ordinateur (11) programmés pour extraire tous les deux éléments de données critiques en valeur ou au moins deux d'entre eux à partir dudit train de données et pour coder les éléments extraits sous une forme lisible par machine codée conformément à un code prédéterminé de telle sorte que lorsqu'ils sont imprimés, les éléments de données codés soient lisibles par un non utilisateur sans l'aide d'un équipement additionnel;
des moyens d'imprimante (3) comportant des moyens d'entrée pour recevoir les éléments de données codés et qui sont agencés pour imprimer les éléments reçus sensiblement immédiatement sur le document au porteur (17),
dans lequel une impression des éléments de données codés et de forme accessible peut être réalisée en une seule passe au travers du système d'impression (2), ce qui permet une production en grande série automatisée haute vitesse de documents au porteur (17),
le système de vérification incluant en outre des moyens de vérification (31) comprenant:
des moyens de lecture de document au porteur (23) pour lire au moins les éléments de données codés imprimés sur les documents (17); et
des moyens de traitement (25) pour convertir les éléments de données lus selon une forme qui convient pour une comparaison avec les éléments de données sous forme accessible imprimés sur le document (17).

2. Système selon la revendication 1, dans lequel les moyens de lecture de document (23) comprennent une unité d'affichage (27) pour afficher les éléments de données décodés pour permettre une comparaison visuelle avec les éléments de données sous forme accessible correspondants imprimés sur le document (17).

3. Système selon la revendication 1, dans lequel les moyens de lecture de document (23) comprennent des moyens pour lire les éléments de données sous forme accessible imprimés sur le document (17) et des moyens de comparaison (26) pour comparer automatiquement les éléments de données sous forme accessible lus et les éléments de données décodés afin de produire une indication de sortie de la correspondance.

4. Système selon l'une quelconque des revendications précédentes, dans lequel ledit document (17) est un chèque.

5. Système selon l'une quelconque des revendications précédentes, dans lequel lesdits moyens d'impression (3) sont agencés pour imprimer les éléments de données codés en encre invisible.

6. Système selon l'une quelconque des revendications précédentes, dans lequel lesdits moyens d'ordinateur (11) codent les éléments de données extraits en les convertissant en caractères imprimables non alphanumériques.

7. Système selon la revendication 6, dans lequel les moyens d'impression (3) sont agencés pour imprimer les éléments de données codés sous la forme d'un code à barres monodimensionnel ou multidimensionnel.

8. Système selon l'une quelconque des revendications précédentes, dans lequel les moyens d'imprimante (3) permettant d'imprimer les éléments de données codés, les moyens d'imprimante commandés par ordinateur primaire (3) permettant d'imprimer les éléments de données lisibles par utilisateur et les moyens d'ordinateur (11) sont intégrés selon une unique unité.

9. Procédé permettant la vérification de l'authenticité d'un document au porteur (17) et comprenant les étapes de:
réception depuis un ordinateur (11) d'un train de données comprenant une pluralité d'éléments de données à imprimer sur le document au porteur (17) sous une forme lisible par utilisateur accessible, au moins deux des éléments de données étant critiques en valeur;
extraction, à partir du train de données, de tous les deux éléments de données critiques en valeur ou d'au moins deux d'entre eux et codage des éléments de données extraits selon une forme pour l'impression sur le document au porteur conformément à un code prédéterminé sous une forme décodable et lisible par machine mais non lisible par un utilisateur; et
impression du train de données d'éléments de données en association avec les éléments de données codés sur le document au porteur en une seule passe, ce qui permet une production en grande série automatisée haute vitesse de documents au porteur.

10. Procédé selon la revendication 9, dans lequel lesdits éléments de données codés sont imprimés sur le document (17) sous une forme qui est invisible à l'oeil sans assistance.

11. Procédé selon la revendication 9 ou 10, dans lequel l'étape de codage des éléments de données extraits ne met pas en jeu l'utilisation d'une clé de cryptage.

12. Procédé selon l'une quelconque des revendications 9 à 11 et comprenant la lecture des éléments de données codés sur le document (17) et leur décodage selon une forme qui permet la réalisation d'une comparaison avec les éléments de données sous forme accessible imprimés sur le document.

13. Procédé selon la revendication 12 et incluant l'étape d'affichage visuel des éléments de données décodés pour permettre la réalisation d'une comparaison visuelle avec les éléments de données sous forme accessible imprimés sur le document.

14. Procédé selon la revendication 12 et incluant les étapes de lecture supplémentaire au moyen d'une machine (23) desdits éléments de données sous forme accessible imprimés sur le document (17), de mise en oeuvre d'une comparaison automatisée entre lesdits éléments de données sous forme accessible lus et les éléments décodés et de production d'une indication de sortie de la correspondance.
